# EUROPÄISCHE PATENTANMELDUNG

(11) **EP 1 443 777 A1**
(43) Veröffentlichungstag der Anmeldung: **04.08.2004**
(21) Anmeldenummer: 03002016.8
(22) Anmeldetag: 28.01.2003
(51) Int. Cl.: H04N 17/04

(54) **Profilierungsvorrichtung, damit ausgestatteter elektronischer Projektor und Verfahren zur Profilierung einer elektronischen Anzeigevorrichtung**

(71) Anmelder: Gretag-Macbeth AG, 8105 Regensdorf (CH)
(72) Erfinder: Frick, Beat, 8107 Buchs (CH); Ehbets, Peter, 8046 Zürich (CH); Lamy, Francis, 8702 Zollikon/ZH (CH)
(74) Vertreter: Schwabe - Sandmair - Marx

(57) **Zusammenfassung**

Ein elektronischer Projektor (Beamer) ist mit einer über Standardschnittstellen intern oder extern angeschlossenen Profilierungsvorrichtung (100) ausgestattet. Die Profilierungsvorrichtung enthält alle für das Color Management (Farbmessung, Kalibrierung, Profilerzeugung etc.) erforderlichen Funktionalitäten und verkehrt mit dem Projektor (200) mittels eines einfachen text-basierten Protokolls. Letzteres kann im Projektor relativ einfach rein software-mässig implementiert werden, so dass keine Änderungen der grundlegenden Konzeption des Projektors erforderlich sind. Dadurch kann die Profilierungsvorrichtung einerseits leicht werksseitig in bestehende Projektoren integriert und anderseits auch als externe Ergänzung zu vorhandenen Projektoren eingesetzt werden. Die Profilierungsvorrichtung kann abcr auch als eigenständiges Gerät für die Profilierung von anderen elektronischen Anzeigeeinrichtungen (z.B. Monitore) sowie auch für andere z.B. messtechnische Aufgaben eingesetzt werden.

## Beschreibung

Die Erfindung betrifft eine insbesondere für einen elektronischen Projektor bestimmte Profilierungsvorrichtung gemäss dem Oberbegriff des unabhängigen Anspruchs 1 sowie einen mit einer solchen Profilierungsvorrichtung ausgestatteten elektronischen Projektor gemäss dem Oberbegriff des unabhängigen Anspruchs 11. Die Erfindung betrifft ferner ein Verfahren zur Profilierung einer durch einen Bilddatenstrom gespeisten elektronischen Anzeigevorrichtung gemäss dem Oberbegriff des unabhängigen Anspruchs 21.

Konkreter befasst sich die vorliegende Erfindung mit der Verbesserung der Farbwiedergabequalität von elektronischen Anzeigeeinrichtungen (Displays) generell und elektronischen Daten- und Videoprojektoren (Beamer) im speziellen.

Ein elektronischer Projektor ((Beamer) wandelt elektronische Bildinformationssignale bzw. -daten in optische Bilder um und projiziert diese auf eine geeignete Projektionsfläche, beispielsweise eine Leinwand. Der Beamer erhält als Eingangssignal ein Videosignal von der Videokarte eines Computers oder einer anderen analogen oder digitalen Signalquelle, beispielsweise etwa einem Video-Recorder oder einem DVD-Abspielgerät. Falls das Eingangssignal nicht schon in digitaler Form vorliegt, wird es im Beamer digitalisiert und in die Farbkomponenten R, G, und B zerlegt. Mit den Farbsignalen R, G, und B wird nach diversen Anpassungen und Korrekturen ein optischer Modulator angesteuert. Dieser wird mit einer Beleuchtungsoptik ausgelesen und mit einer Abbildungsoptik auf eine Projektionsfläche projiziert. Heutige Beamertechnologien benutzen als optische Modulatoren entweder TFT-LCDs (Thin Film Transistor - Liquid Crystal Displays), Polysilizium-LCDs oder eine Matrix aus bewegbaren Mikrospiegeln, z. B. der DMD-Chip (Digital Micro Mirror Device) von Texas Instruments. Optische Modulatoren werden allgemein auch als Lichtventile (Light Valves) bezeichnet.

Das optische System von Beamern ist normalerweise für einen maximalen Wirkungsgrad der Beleuchtungs- und Projektionsoptik optimiert. Das Ziel ist es dabei, ein möglichst lichtstarkes Bild auf der Projektionsfläche zu erzeugen, um in nicht abgedunkelten Räumen einen möglichst hohen sichtbaren Kontrast zu erreichen.

Die Farbwiedergabequalität von einfacheren Beamern ist trotz sorgfältiger Kalibrierung (Helligkeit, Kontrast, Farbtemperatur) relativ schlecht. Gegenüber einem Monitorbild treten deutlich sichtbare Farbtonverschiebungen auf. Ausserdem erscheinen die Farben wegen der Auslegung auf maximale Lichtstärke als zu wenig gesättigt. Modernere Beamer sind daher mit einer Transformationsstufe (Farbraumkonverter, Color Space Converter) ausgestattet, welche das zugeführte digitale bzw. digitalisierte Eingangssignal in den Farbraum des Beamers transformiert und so die Farbtreue der Reproduktion wesentlich verbessert, wobei die Grenzen im wesentlichen nur noch durch den vom Beamer darstellbaren Farbraum (Gamut) und die Reflexionseigenschaften der Projektionsfläche gegeben sind. Die im Farbraumkonverter verwendeten Transformationsparameter beschreiben die erforderlichen Korrekturen.

Color Management und Color Management Systeme sind an sich bekannt und werden in digitalen Farbreproduktionssprozessen allgemein eingesetzt. Eine umfassende und übersichtliche Darstellung der Hintergründe, Technologien und Anwendungen von Color Management Systemen findet sich in der von der Firma Logo GmbH, einer Gesellschaft der GretagMacbeth Gruppe, im August 1999 herausgegebenen Publikation "Postscriptum on Color Management, Philosophy and Technology of Color Management" der Autoren Stefan Brües, Liane May und Dietmar Fuchs. Eine weitere Abhandlung über Color Management findet sich beispielsweise im Kapitel 17 "Device-Independent Color Imaging" des Buchs "Color Appearance Models" von Mark D. Fairchild, erste Auflage, herausgegeben 1997 von Addison Wesley.

Ein Color Management System ermöglicht eine farbtreue Reproduktion einer Bildvorlage in einem digitalen Arbeitsablauf, der ein Eingabemedium (z. B. Scanner oder digitale Kamera) und mehrere Ausgabemedien (z. B. Monitor und Drucker) beinhalten kann. Mit dem Eingabemedium wird die Vorlage digitalisiert und die RGB-Werte jedes Bildpixels in einem Datenfile abgespeichert. Das RGB-Bild kann am Monitor oder mittels eines Beamers dargestellt oder für eine Ausgabe auf einem Drucker in die Druckfarben CMYK (Cyan, Magenta, Yellow, Schwarz) umgerechnet werden. Die farbtreue Reproduktion wird durch den Einsatz einer Gerätekalibrierung und von Geräteprofilen erreicht. Der oben erwähnte Farbraumkonverter realisiert im wesentlichen ein Geräteprofil, wie es vom Color Management bekannt ist, in Hardware.

Bei der Gerätekalibrierung werden die Grundeinstellungen des Geräts möglichst optimal für die gewünschte Reproduktion gewählt. Dies beinhaltet zum Beispiel beim Beamer die Einstellung des Kontrasts, der Helligkeit, des Weiss- und Schwarzpunktes sowie der Farbtemperatur entsprechend der gewünschten Beleuchtungsart. Die Kalibrierung kann in an sich bekannter Weise mit Hilfe von Farbmessgeräten optimal ausgeführt und vor allem reproduzierbar gemacht werden.

Ein Geräteprofil beschreibt den Farbraum eines Eingabe- oder Ausgabegeräts, indem es den gerätespezifischen Farbwerten (z. B. RGB oder CMYK) absolute Farbwerte (XYZ oder CIELab L*a*b*) gemäss den Spezifikation der CIE (Commission Internationale de l'Eclairage) oder andere nicht gerätespezifische Farbwerte (z.B. sRGB) zuordnet. Ein Geräteprofil besteht typischerweise aus diversen Farbwertersatztabellen (Look-up Tabellen) und Koeffizienten einer Farbraum transformationsmatrix. Das Geräteprofil hängt stark von der Gerätekalibration ab. Um Color Management erfolgreich durchführen zu können, ist es deshalb Voraussetzung, dass sich die Kalibration aller beteiligten Ein- und Ausgabegeräte nicht verändert. Sie muss durch regelmässige Kontrolle und Nachjustierung in einem konstanten Zustand gehalten werden.

Für die farbtreue Bildreproduktion verbindet das Color Management System die Profile des Eingabe- und Ausgabemediums und erhält so eine Transfercharakteristik. Gleichzeitig führt das CMS eine Abbildung des Farbraums des Eingabegeräts auf den Farbraum des Ausgabegeräts durch. Diese Abbildung stellt sicher, dass alle Farben auf dem Ausgabemedium dargestellt werden können. Die Abbildungen, d. h. die Reskalierung der Farbräume, wird gemäss verschiedenen Reproduktionskriterien, den sogenannten Rendering Intents, durchgeführt. Dabei wird zwischen den Moden "Perceptual" (gleicher Farbeindruck im Bild), "Relativ Colorimetric", "Absolute Colorimetric" und "Saturation" unterschieden, welche im Dokument ICC-1:1998-09 des International Color Consortium definiert sind.

Bei der Profilerstellung muss der Farbraum der Ein- und Ausgabegeräte mit spezialisierten Farbmessgeräten oder mittels farbmetrisch kalibrierter Vorlagen, sogenannten Testcharts, vermessen werden. Für optimale Resultate sollte die verwendete Farbmesstechnik auf einer spektralen Messung (Spektralphotometrie) beruhen. Dies ermöglicht die Erkennung von Metamerie und Fluoreszenz sowie die richtige Bewertung verschiedener Beleuchtungsarten.

Das Color Management und vor allem die Farbmesstechnik für Beamer ist aufwendiger im Vergleich zu Monitoren, welche als Ausgabemedium ebenfalls mit RGB Signalen angesteuert werden. Die Ursache dafür liegt in der Tatsache, dass der Farbeindruck beim Beamer nicht nur vom Gerät selbst, sondern auch von der Reflexionsund Streucharakteristik der Projektionsfläche (z.B. Leinwand), der spektralen Verteilung und der Helligkeit des Umgebungslichts im Raum sowie von wahrnehmungsund empfindungsbestimmenden Faktoren des menschlichen Beobachters, z. B. dem Adaptationsgrad des Auges abhängt. Diese Faktoren müssen messtechnisch erfasst und im Color Management System berücksichtigt werden können. Diese Faktoren sind auch verantwortlich dafür, dass eine während der Herstellung des Beamers durchgeführte Grundkalibration und Profilierung keine optimale Farbreproduktion ermöglicht. Idealerweise muss die Kalibration und Profilierung beim Anwender in regelmässigen Abständen durchgeführt und wiederholt werden, so dass auch Veränderungen und Alterungsprozesse im optischen System des Beamers kompensiert werden können.

In der EP-A-1 150 159 ist ein Beamer mit einem integrierten Color Management System beschrieben. Der Beamer ist mit einem eingebauten oder extern angeschlossenen Farbmessgerät ausgestattet, welches als Tristimulus-Farbmessgerät oder vorzugsweise als Spektralfotometer ausgebildet ist. Das Farbmessgerät empfängt das innerhalb eines Messbereichs (Messflecks) von der Projektionsfläche remittierte (reflektierte und gestreute) Licht und erzeugt die entsprechenden absoluten (genormten) Farbmesswerte X,Y und Z (oder daraus abgeleitete Grössen). Im Beamer sind zusätzlich zu den normalen Komponenten und Funktionseinheiten eine Profilerzeugungsfunktion und eine Kalibrierungsfunktion vorgesehen, welche mit dem Farbmessgerät zusammenarbeiten und dessen Farbmesswerte als Eingangsdaten erhalten. Die vom Farbmessgerät erzeugten Farbmesswerte werden dann im Beamer zur automatischen Erst- und Nach-Kalibrierung und zur Berechnung des Geräteprofils (Einstellung des Farbraumkonverters) ausgewertet. Da das Farbmessgerät das von der Projektionsfläche zurückkommende Licht misst, beschreibt das anhand der Farbmesswerte erzeugte Profil die gesamte Transfercharakteristik des Beamers ausgehend von dem dem Beamer zugeführten analogen oder digitalen Videodatenstrom über den Beamer selbst und die Projektionsfläche bis hin zum Auge des Beobachters.

Der in der EP-A-1 150 159 beschriebene Beamer setzt voraus, dass der Beamer von Haus aus mit den erforderlichen Komponenten ausgerüstet ist, um mit dem Farbmessgerät zusammenarbeiten und dessen Messwerte in der erläuterten Weise auswerten zu können. Die meisten auf dem Markt erhältlichen Beamer sind dazu jedoch nicht eingerichtet. Durch die vorliegende Erfindung soll nun eine Möglichkeit geschaffen werden, solche Beamer auf vergleichsweise einfache Weise mit Kalibrierungs- und Profilerzeugungsfunktionen entsprechend den Methoden des Color Management nachzurüsten, ohne dass dazu grundlegende Eingriffe in die Konzeption des Beamers erforderlich sind.

Diese der Erfindung zugrundeliegende Aufgabe wird durch die durch die Merkmale des unabhängigen Anspruchs 1 gekennzeichnete erfindungsgemässe Profilierungsvorrichtung gelöst. Der entsprechende erfindungsgemässe Projektor ist durch die Merkmale des unabhängigen Anspruchs 11 gekennzeichnet.

Gemäss dem Hauptgedanken der Erfindung enthält also die Profilierungsvorrichtung alle für das Color Management erforderlichen Funktionalitäten und verkehrt mit dem Beamer über eine der in diesem standardmässig vorhandenen Datenschnittstellen mittels eines vereinbarten, vorzugsweise einfachen text-basierten Protokolls. Letzteres kann im Beamer ohne substantielle Eingriffe sehr einfach z.B. durch ein sog. Firmware-Upgrade implementiert werden, so dass also keine Änderungen der grundlegenden Konzeption des Beamers erforderlich sind. Durch den erfindungsgemässen Aufbau kann die Profilierungsvorrichtung aber auch als eigenständiges Gerät für die Profilierung von anderen elektronischen Anzeigeeinrichtungen (z.B. Monitore) und auch als Farbmessgerät eingesetzt werden.

Vorteilhafte Ausgestaltungen und Weiterbildungen der erfindungsgemässen Profilierungsvorrichtung und des erfindungsgemässen Projektors sind Gegenstand der von den Ansprüchen 1 und 11 abhängigen Ansprüche.

Das mit der erfindungsgemässen Profilierungsvorrichtung durchführbare erfindungsgemässe Profilierungsverfahren ist durch die Merkmale des unabhängigen Anspruchs 21 gekennzeichnet. Vorteilhafte Ausgestaltungen und Weiterbildungen des Verfahrens sind Gegenstand der vom Anspruch 21 abhängigen Ansprüche.

Im folgenden wird die Erfindung anhand der Zeichnung näher erläutert. Es zeigen:
- Fig. 1: eine schematische Darstellung der wichtigsten Komponenten der erfindungsgemässen Profilierungsvorrichtung,
- Fig. 2: ein Blockschema der funktionswesentlichen Software-Module und des Datenflusses der Profilierungsvorrichtung gemäss Fig. 1,
- Fig. 3: eine schematische Darstellung der wichtigsten Komponenten des erfindungsgemässen Projektors,
- Fig. 4: ein Blockschema der funktionswesentlichen Software-Module und des Datenflusses des Projektors gemäss Fig. 3,
- Fig. 5: die Zusammenschaltung einer Profilierungsvorrichtung gemäss Fig. 1 mit einem Projektor im praktischen Einsatz,
- Fig. 6: die Zusammenschaltung eines Projektors gemäss Fig. 3 mit diversen Bildsignalquellen und einem externen Rechner und
- Fig. 7: den Einsatz der erfindungsgemässen Profilierungsvorrichtung zur Profilierung des Monitors eines Rechners,
- Fig. 8: ein grafische Darstellung eines Ausschnitts aus einem Bilddatenstrom und
- Fig. 9: ein Blockschema der wichtigsten Schritte des erfindungsgemässen Profilierungsverfahrens.

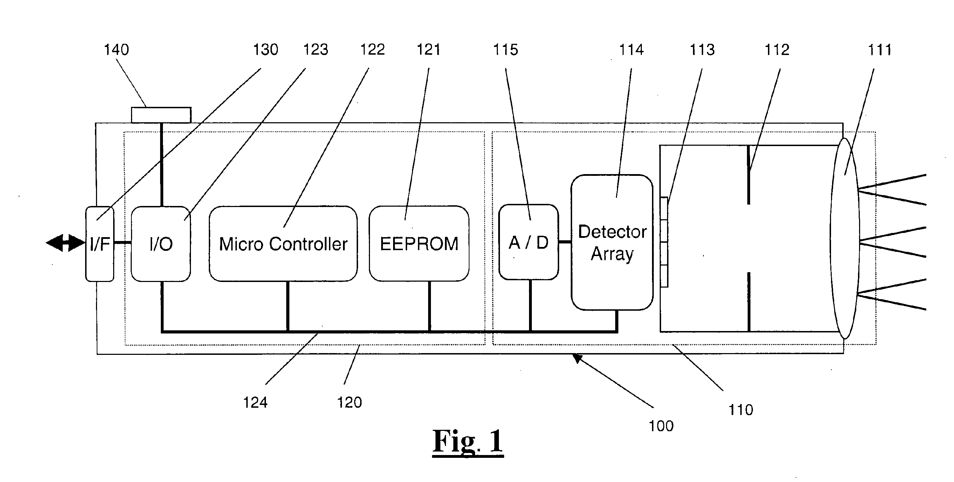

Die in Fig. 1 gezeigte erfindungsgemässe Profilierungsvorrichtung 100 besteht im wesentlichen aus einer Farbmesseinheit 110 und einem digitalen micro-controllerbasierten Rechner 120. Die konventionell aufgebaute Farbmesseinheit umfasst eine Eingangsoptik 111, eine Blende 112, einen Satz Farbfilter 113, eine Fotoempfängeranordnung 114 und einen A/D-Wandler 115. Der ebenfalls konventionell aufgebaute Rechner umfasst einen Speicher 121, einen Prozessor (Micro Controller) 122, eine Ein/Ausgabesteuerung 123 und einen Bus 124. An den Rechner sind über die Ein/Ausgabesteuerung eine bi-direktionale Schnittstelle 130 und ein Bedienungsorgan 140 in Form einer Taste angeschlossen. Selbstverständlich umfasst der Rechner auch noch einen Arbeitsspeicher, der jedoch der Übersichtlichkeit halber nicht dargestellt ist.

Die vorzugsweise für Messungen auf Distanz ausgelegte Eingangsoptik 111 lenkt das vom auszumessenden Objekt (z.B. einer von einem elektronischen Projektor beleuchteten Projektionsfläche) in einem kleinen Raumwinkelbereich kommende Messlicht durch die Blende 112 und die Farbfilter 113 auf die Fotoempfängeranordnung 114, welche daraus entsprechende elektrische Signale erzeugt, die vom A/D-Wandler 115 in entsprechende digitale Messwerte umgewandelt werden. Der Rechner 120 steuert aufgrund eines in seinem Speicher 121 abgelegten Programms die Fotoempfängeranordnung 114 und den A/D-Wandler 115, verarbeitet die vom A/D-Wandler 115 erzeugten digitalen Messwerte und regelt die Kommunikation mit dem Bedienungsorgan 140 und der Schnittstelle 130 sowie den dazugehörigen Daten- und Befehlsfluss. Die Profilierungsvorrichtung ist über die Schnittstelle 130 durch einen externen Rechner steuerbar und kann über die Schnittstelle 130 Daten und Befehle an einen externen Rechner ausgeben.

Im Beispiel ist die Messeinheit 110 als Dreibereichs-(Tristimulus-)Filter-Farbmessgerät ausgelegt, wobei die Messwerte die Farbwerte X, Y und Z gemäss CIE (Commission Internationale de l'Edairage) darstellen. Alternativ kann auch ein geeichtes RGB-Messgerät eingesetzt werden. In einer weiteren Alternative kann anstelle des Farbfiltersatzes 113 auch ein Spektrometer vorgesehen sein, wobei dann die spektralen Messdaten gemäss den Normen der CIE im Rechner in die Farbmesswerte X, Y und Z (oder daraus abgeleitete Grössen) umgerechnet würden. Für das folgende wird unter Farbmesswerten immer das Farbwert-Tripel X, Y, Z (oder ein gleichwertiges Multipel von daraus abgeleiteten Grössen, speziell absoluten Farbwerten) verstanden.

Soweit entspricht die dargestellte Profilierungsvorrichtung 100 in Aufbau und prinzipieller Funktionsweise voll und ganz einem herkömmlichen rechnergesteuerten Farbmessgerät, beispielsweise dem unter der Bezeichnung "Spectrolino" von der Firma Gretag-Macbeth, Regensdorf, Schweiz vertriebenen Gerät. Die Unterschiede gegenüber dem bekannten Stand der Technik liegen in speziellen zusätzlichen Funktionalitäten, die durch die im Speicher 106 abgelegte Software implementiert sind. Darauf wird weiter unten noch näher eingegangen.

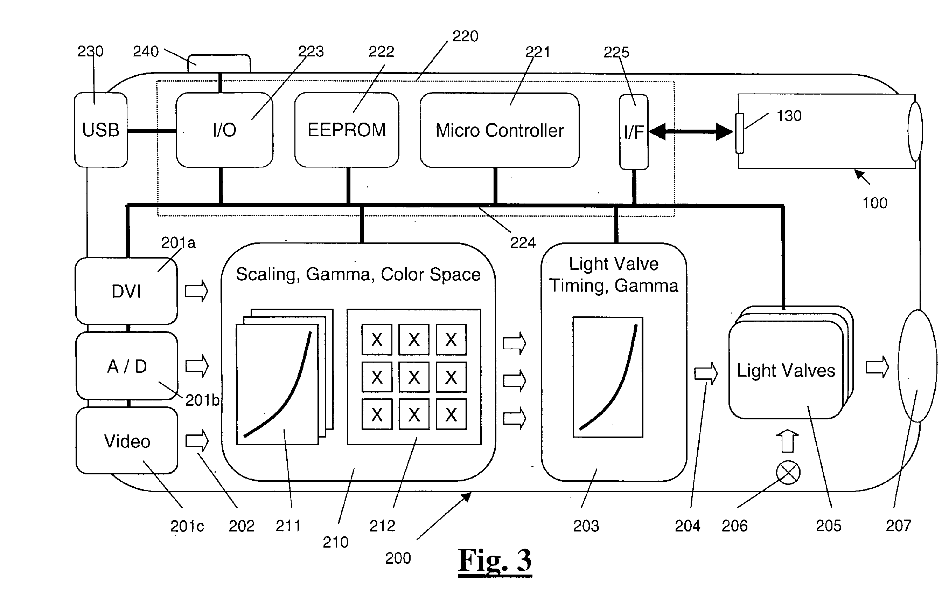

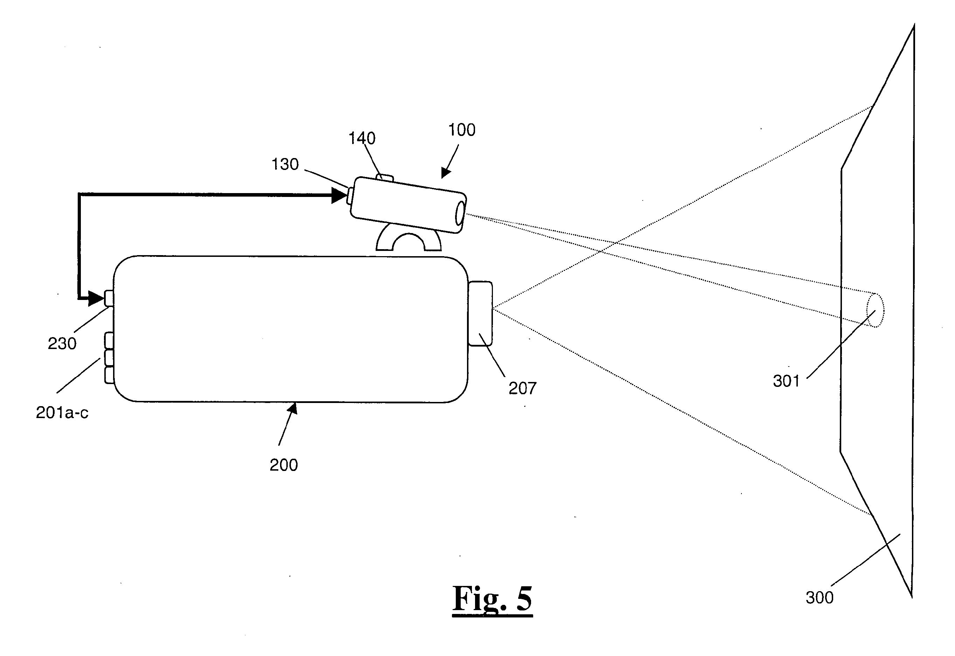

Die erfindungsgemässe Profilierungsvorrichtung 100 ist speziell auf die Verwendung im Zusammenhang mit einem elektronischen Projektor (Beamer) ausgerichtet. Sie kann dabei, wie in Fig. 3 dargestellt, körperlich in den Beamer eingebaut oder aber auch als separates Gerät realisiert sein, wobei sie dann im praktischen Einsatz über ihre Schnittstelle 130 (und eine entsprechende äussere Schnittstelle des Beamers) mit dem Beamer oder mit einem anderen Gerät verbunden wäre (Fig. 5). In jedem Fall ist sie aber als eigenständige kompakte Baueinheit ausgebildet. Für den Beamer-internen Einsatz ist die Schnittstelle 130 vorzugsweise als I²C- oder RS232-Schnittstelle ausgebildet, für den Einsatz als externes Gerät vorzugsweise als USB-Schnittstelle. Selbstverständlich kann die Profilierungsvorrichtung auch mit zwei oder mehreren Schnittstellen (unterschiedlichen Typs) ausgestattet sein, wodurch sie in der Anwendung noch flexibler würde.

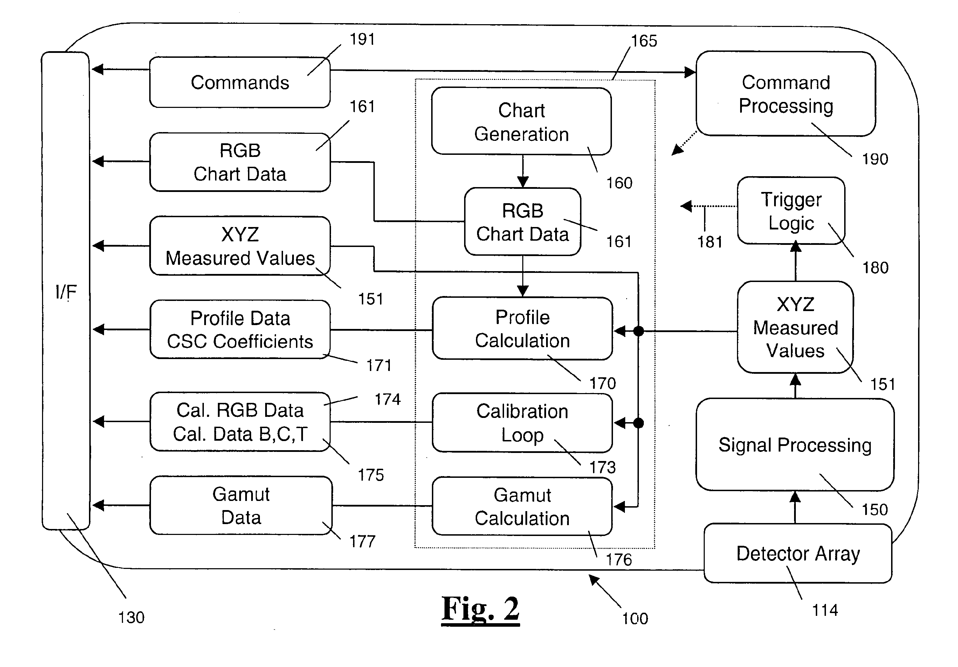

In Fig. 2 sind die erfindungswesentlichen Module der im Speicher 121 der Profilierungsvorrichtung 100 abgelegten Software und die zugehörigen Daten- und Befehlsflüsse dargestellt.

Die Software umfasst ein Signalverarbeitungsmodul 150, ein Chart-Erzeugungsmodul 160, ein Profilberechnungsmodul 170, ein Kalibrierungsmodul 173, ein Gamut-Bererechnungsmodul 176, ein Trigger-Modul 180 und ein Befehlsverarbeitungsmodul 190.

Das Signalverarbeitungsmodul 150 steuert in der bei rechner-basierten Farbmessgeräten üblichen Weise die Fotoempfängeranordnung 114 und den A/D-Wandler 115 und bildet aus den von der Fotoempfängeranordnung 114 erzeugten, dem empfangenen Messlicht entsprechenden Messsignalen digitalen XYZ-Farbmesswerte 151.

Das Chart-Erzeugungsmodul 160 erzeugt RGB Farbwerte entsprechend den einzelnen Farbfeldern einer gespeicherten oder berechneten Farbtafel, wie sie für Profilierungszwecke allgemein üblich und bekannt ist. Diese im folgenden als RGB-Vorgabefarbwerte 161 bezeichneten Farbwerte werden dem Profilberechnungsmodul 170 zugeführt und an der Schnittstelle 130 ausgegeben.

Das Profilberechnungsmodul 170 berechnet aus den ihm vom Chart-Erzeugungsmodul 160 zugeführten RGB-Vorgabefarbwerten 161 und den entsprechenden gemessenen XYZ-Farbmesswerten 151 in an sich bekannter Weise ein genormtes (z..B ICC-) Geräteprofil 171, welches an der Schnittstelle 130 ausgegeben wird.

Das Kalibrierungsmodul 173 erzeugt für Kalibrierungszwecke geeignete RGB-Vorgabekalibrierungsfarbwerte 174 und berechnet aus diesen und den entsprechenden XYZ-Farbmesswerten 151 in an sich bekannter Weise Einstellwerte bzw. Kalibrierungsdaten 175 für die Steuerung der Helligkeit B, des Kontrasts C und der Farbtemperatur T des Beamers, welche RGB-Vorgabekalibrierungsfarbwerte 174 und Einstellwerte bzw. Kalibrierungsdaten 175 an der Schnittstelle 130 ausgegeben werden.

Das Gamut-Berechnungsmodul 176 berechnet in ebenfalls bekannter Weise aus den bei der Ausmessung der Farbtafel erzeugten XYZ-Farbmesswerten 151 Gamut-Daten 177, welche den erreichten Farbraum beschreiben.

Das Trigger-Modul 180 wertet die gemessenen XYZ-Farbmesswerte 151 aus und erzeugt beim Erkennen einer (oder mehrerer) vorgegebener Farbwerte-Sequenzen ein Trigger-Signal 181, das in noch zu beschreibender Weise zum Starten einer Profilberechnungssequenz und/oder einer Kalibrierungssequenz benutzt werden kann.

Das Befehlsverarbeitungsmodul 190 schliesslich wertet über die Schnittstelle 130 gemäss einem vorgegebenen Protokoll zugeführte Befehlsdaten (z.B. den Befehl zum Starten einer Profilberechnungssequenz) aus und gibt umgekehrt dem Programmablauf entsprechende Befehlsdaten über die Schnittstelle 130 aus. Das Modul 190 steuert ausserdem den Datenfluss zwischen den anderen Programm-Modulen und der Schnittstelle 130.

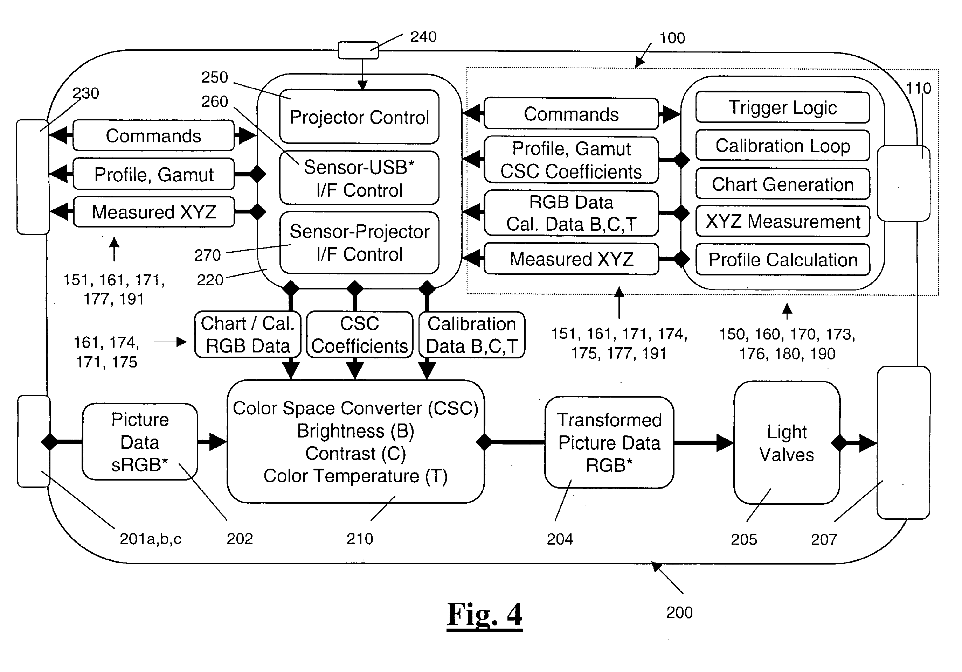

Bevor auf die einzelnen Programm-Module bzw. deren Funktionsweise näher eingegangen wird, wird anhand der Figuren 3 und 4 ein Ausführungsbeispiel eines erfindungsgemässen elektronischen Projektors erläutert, welcher mit der vorstehend beschriebenen erfindungsgemässen Profilierungsvorrichtung ausgestattet ist.

Die Fig. 3 zeigt die funktionswesentlichen Komponenten eines erfindungsgemässen elektronischen Projektors. Der als Ganzes mit 200 bezeichnete Projektor umfasst eingangsseitig eine oder mehrere Eingangsstufen 201a-201c für verschiedene Bildsignaltypen und -normen, beispielsweise Ausgangssignale eines DVI-Geräts, digitale RGB-Bildsignale oder analoge Videosignale verschiedener Normen. Je nach Bildsignaltyp erfolgt in den Eingangsstufen auch eine Digitalisierung. Am Ausgang der Eingangsstufen liegen immer digitale Bilddaten 202, idealerweise im sRGB-Format.

Die digitalen Bildsignale gelangen in eine Transformationsstufe 210, welche eine Skalier- und Gammakorrekturstufe 211 und einen Farbraumkonverter (Color Space Converter CSC) 212 umfasst. Die Skalier- und Gammakorrekturstufe 211 ist durch Farbwertersatztabellen (Look up tables) im Speicher realisiert, der Farbraumkonverter 212 besteht im wesentlichen aus einer Multiplikationsmatrix, z.B. realisiert durch den integrierten Schaltkreis TMC 2272A der Firma Fairchild Semiconductor. Die Farbwertersatztabellen 211 sind üblicherweise für die Einstellung von Helligkeit B, Kontrast C und Farbtemperatur T zuständig, während die Multiplikationsmatrix 212 die Drehung des Farbraums bewirkt. Die von der Transformationsstufe 210 erzeugten, in den RGB-Farbraum des Projektors transformierten Bilddaten werden einer ebenfalls durch Farbwertersatztabellen realisierten Modulationsanpassungsstufe 203 zugeführt, wo sie einer weiteren Gamma-Korrektur unterworfen werden, die den Eigenschaften des zum Einsatz gelangenden Lichtmodulators 205 Rechnung trägt. Dieser moduliert das von einer Projektionslichtquelle 206 kommende Licht anhand der ihm zugeführten transformierten (und angepassten) Bildsignale 204. Als Lichtmodulator kommen vorzugsweise digital arbeitende sogenannte Lichtventile zum Einsatz, welche je nach Modulationssignal Licht durchlassen oder abblocken. Typischerweise sind solche Lichtventile als Mikrospiegelfelder ausgebildet. Selbstverständlich sind auch andere Typen von Modulatoren einsetzbar. Das vom Lichtmodulator räumlich und farblich modulierte Licht wird dann von einer Projektionsoptik 207 auf eine (nicht dargestellte) Projektionsfläche geworfen.

Zur Steuerung der genannten Funktionseinheiten des Projektors 200 ist eine microcontroller-basierte Steuerung 220 vorgesehen, welche konventionell aufgebaut ist und typischerweise einen Prozessor (Micro Controller) 221, einen Speicher 222 und eine Ein/Ausgabesteuerung 223 sowie einen Bus 224, einen nicht dargestellten Arbeitsspeicher und eine bi-direktionale (z.B. I²C) Schnittstelle 225 umfasst. An letztere ist über ihre bi-direktionale Schnittstelle 130 die Profilierungsvorrichtung 100 gemäss Fig. 1 angeschlossen. Ferner sind an die Steuerung bzw. den Prozessor 221 über die Ein/Ausgabesteuerung 223 eine äussere bi-direktionale Kommunikationsschnittstelle 230 und ein Bedienungsorgan 240 in Form einer Taste angeschlossen. Der Prozessor 221 steuert aufgrund eines in seinem Speicher 222 abgelegten Programms die Eingangsstufen 201 a-c, die Transformationsstufe 210, die Modulationsanpassungsstufe 203, den Modulator 205 und die Lichtquelle 206, verarbeitet die von der Profilierungsvorrichtung 100 kommenden Daten und Befehle und regelt die Kommunikation mit dem Bedienungsorgan 240 und der äusseren Kommunikationsschnittstelle 230 sowie den dazugehörigen Daten- und Befehlsfluss. Über die vorzugsweise als USB-Schnittstelle ausgebildete äussere Kommunikationsschnittstelle 230 kann ein externer Rechner zum Daten- und Befehlsaustausch angeschlossen werden.

Soweit entspricht der dargestellte Projektor 200 (mit Ausnahme der eingebauten erfindungsgemässen Profilierungsvorrichtung 100) in Aufbau und prinzipieller Funktionsweise voll und ganz einem herkömmlichen elektronischen Projektor, beispielsweise dem unter der Bezeichnung "DLA-SX21D" von der Firma JVC vertriebenen Gerät oder dem in der eingangs erwähnten EP-A-1 150 159 beschriebenen Beamer mit integrierter Profilierungs- und Kalibrierungsfunktion. Die Unterschiede gegenüber dem bekannten Stand der Technik liegen einerseits in der speziellen Ausbildung der Profilierungsvorrichtung 100 und anderseits in daraus resultierenden speziellen Funktionalitäten, die durch die im Speicher 222 abgelegte Software implementiert sind.

In Fig. 4 sind die erfindungswesentlichen Module der im Speicher 222 der Projektorsteuerung 220 abgelegten Software und die zugehörigen Daten- und Befehlsflüsse dargestellt.

Die Software des Projektors 200 umfasst ein Projektor-Kontrollmodul 250, ein Datentransfermodul 260 und ein Verbindungsmodul 270.

Das Projektor-Kontrollmodul 250 steuert in bei solchen Geräten bekannter Weise die Eingangsstufen 201 a-c, die Transformationsstufe 210, die Modulationsanpassungsstufe 203, den Modulator 205 und die Lichtquelle 206 und regelt die Kommunikation mit dem Bedienungsorgan 240 und der äusseren Kommunikationsschnittstelle 230 sowie den dazugehörigen Daten- und Befehlsfluss.

Das Datentransfermodul 260 sorgt stellt eine Datenverbindung zwischen der äusseren Kommunikationsschnittstelle 230 und der über die (innere) Schnittstelle 225 angeschlossene Profilierungsvorrichtung 100, so dass die in den Projektor 200 eingebaute Profilierungsvorrichtung 100 über die äussere Kommunikationsschnittstelle 230 mit einem über diese angeschlossenen externen Gerät kommunizieren kann, d.h. mit diesem Messdaten, berechnete Daten, Chart-Daten, Steuerbefehle u.s.w. austauschen kann.

Das Verbindungsmodul 270 schliesslich regelt den Datenaustausch zwischen der Profilierungsvorrichtung 100 und der Projektor-Steuerung 220 bzw. deren Projektor-Kontroll-Modul 250.

Die Programm-Module der Profilierungsvorrichtung 100 wurden schon anhand der Fig. 2 beschrieben. Die zwischen den einzelnen Funktionseinheiten bzw. Programm-Modulen im Projektor 200 und in der Profilierungsvorrichtung 100 ausgetauschten Daten sind in Fig. 4 mit denselben Bezugsziffern wie in den Figuren 2 und 3 bezeichnet und sind selbsterklärend.

Im folgenden wird die Funktionsweise der einzelnen Programm-Module der Profilierungsvorrichtung 100 und des Projektors 200 beispielsweise näher erläutert. Ausgelöst werden die Funktionen manuell durch Betätigung des Bedienungsorgans 240 am Projektor 200 oder, wenn die Profilierungsvorrichtung 100 extern angeordnet ist, des Bedienungsorgans 140 an der Profilierungsvorrichtung 100. Falls ein externes Gerät (z.B. ein PC) über die äussere Kommunikationschnittstelle 230 des Projektors 200 oder die Schnittstelle 130 der Profilierungsvorrichtung 100 angeschlossen ist, kann der Startbefehl auch von diesem externen Gerät kommen. Schliesslich können die Funktionsabläufe auch vom Trigger-Modul 180 in der Profilierungsvorrichtung 100 ausgelöst werden; darauf wird weiter unten noch näher eingegangen.

Die Kalibrierung des Projektors betrifft die Einstellung von Kontrast, Helligkeit und Farbtemperatur des Projektors. Dies erfolgt grundsätzlich durch Einstellung bzw. Veränderung von entsprechenden Steuergrössen im Projektor.

Nach Auslösung der Kalibrierungsfunktion übernimmt die Profilierungsvorrichtung die Kontrolle aller folgenden Abläufe. Das Kalibrierungsmodul 173 erzeugt eine Abfolge von Kalibrierungsfarbmustern und schickt die dazugehörigen RGB-Farbwerte als Vorgabekalibrierungsfarbwerte 174 an den Projektor 200. Dieser speist diese Vorgabekalibrierungsfarbwerte als Bilddaten in die Transformationsstufe 210 ein und erzeugt auf der (in den Figuren 1-4 nicht gezeigten) Projektionsfläche sequentiell eine bildliche Darstellung der einzelnen Kalibrierungsfarbmuster. Die Profilierungsvorrichtung 100 misst die projizierten Kalibrierungsfarbmuster farbmetrisch aus und erzeugt entsprechende Farbmesswerte 151. Diese Farbmesswerte werden im Kalibrierungsmodul ausgewertet und zu Kalibrierungsdaten (Einstellgrössen) 175 verarbeitet, welche an den Projektor 200 zur Einstellung von Kontrast, Helligkeit und Farbtemperatur geschickt werden.

Für die Einstellung des Kontrasts erzeugt das Kalibrierungsmodul 173 abwechselnd zwei Weissbilder (z.B. max. weiss 255,255,255 und fast max. weiss 250,250,250). Aus den entsprechenden gemessenen Farbmesswerten wird die Helligkeitsdifferenz (bei anfänglich max. Kontrasteinstellung des Projektors) bestimmt. Daraufhin wird ein Kontrasteinstellwert C an den Projektor geschickt, welcher zu einer Erniedrigung von dessen Kontrast führt - der Kontrast wird erniedrigt. Daraufhin werden die beiden Weissbilder wieder erzeugt und ausgemessen, die Helligkeitsvariation bestimmt und der Kontrast erniedrigt. Dieses Verfahren wird solange fortgesetzt, bis die gemessene Helligkeitsdifferenz einen vorgegebenen Schwellenwert erreicht oder übersteigt, was bedeutet, dass der Projektor gerade nicht mehr sättigt.

Für die Einstellung der Helligkeit des Projektors wird analog vorgegangen. Das Kalibrierungsmodul 173 erzeugt abwechselnd zwei Schwarzbilder (z.B. max. schwarz 0,0,0 und fast max. schwarz 5,5,5). Die Helligkeitsdifferenz der vom Projektor dargestellten Bilder wird berechnet und an den Projektor wird ein Helligkeitseinstellwert B geschickt, der zur Erhöhung von dessen (anfänglich minimal eingestellter) Helligkeit führt - die Helligkeit wird erhöht. Daraufhin werden die beiden Schwarzbilder wieder erzeugt und ausgemessen, die Helligkeitsvariation bestimmt und die Helligkeit erhöht. Dieses Verfahren wird solange fortgesetzt, bis die gemessene Helligkeitsdifferenz einen vorgegebenen Schwellenwert erreicht oder übersteigt, was bedeutet, dass der die Aussteuerung des Projektors gerade über der Dunkelschwelle liegt.

Die Farbtemperatur wird als individuelle Kontrasteinstellung der einzelnen Farbkanäle des Projektors eingestellt. Die Farbtemperatur kann z.B. D65 ("Tageslicht", 6500 Kelvin) oder A55 ("Kunstlicht", 5500 Kelvin) sein. Jeder Farbtemperatur entspricht ein bestimmtes Verhältnis von X:Y:Z.

Das Kalibrierungsmodul 173 erzeugt ein Weissbild (anfängliche RGB-Werte 255, 255, 255), und die Farbtemperatur des projizierten Weissbilds wird aus den entsprechenden Farbmesswerten 151 berechnet. Dann werden analog wie zuvor beschrieben die Kontraste der einzelnen Farbkanäle des Projektors erniedrigt, bis die Farbtemperatur stimmt. Um maximale Helligkeit zu erreichen ist natürlich einer der Farbkontraste maximal.

Auf die Kalibrierung (Grundeinstellung) des Projektors 200 folgt die Profilierung mittels des Chart-Erzeugungsmoduls 160 und des Profilierungsmoduls 170 der Profilierungsvorrichtung 100.

Das Chart-Erzeugungsmodul 160 erzeugt die RGB-Farbwerte von Farbmustern einer Farbmustertafel und schickt diese RGB-Farbwerte sequentiell als Vorgabefarbwerte 161 an das Profilierungsmodul 170 und an den Projektor 200. Dieser speist diese Vorgabefarbwerte 161 als Bilddaten in die Transformationsstufe 210 ein und erzeugt auf der (in den Figuren 1-4 nicht gezeigten) Projektionsfläche sequentiell eine bildliche Darstellung der einzelnen Profilierungsfarbmuster. Die Profilierungsvorrichtung 100 misst die projizierten Farbmuster farbmetrisch aus und erzeugt entsprechende Farbmesswerte 151. Diese Farbmesswerte werden im Profilierungsmodul 170 zusammen mit den Vorgabefarbwerten 161 ausgewertet und zu einem Geräteprofil 171 verarbeitet, welches an den Projektor 200 zur Einstellung der Transformationsstufe 210, speziell deren Farbraumkonverters 212 geschickt werden. Vor dem Profilierungsvorgang wird die Transformationsstufe 210 des Projektors 200 durch einen entsprechenden Befehl der Profilierungsvorrichtung 100 auf "neutral" eingestellt. Dies kann Identität (Bilddaten passieren unverändert), Standardeinstellung der Look-up-Tabellen 211 oder Einstellung gemäss der vorangegangenen Kalibrierung bedeuten. Die Vorgabefarbwerte 161 der Farbmuster der Farbmustertafel können im Chart-Erzeugungsmodul 160 gespeichert vorliegen oder auch dynamisch berechnet werden. Wenn das Geräteprofil 171 fertig erstellt ist, wird es an den Projektor 200 geschickt. Das Projektor-Kontroll-Modul 250 extrahiert daraus die Daten für die Farbwertersatztabellen 211 und die Matrix-Koeffizienten für den Farbraumkonverter 212 und schreibt sie in die dafür vorgesehenen Speicherstellenstellen, so dass sie die Transformationsstufe 210 verwenden kann.

Für gewisse Anwendungen kann es nützlich sein, eine Information (zahlenmässige Beschreibung) über den z.B. während der Profilierung ausgemessenen bzw. vom Projektor erreichten Farbraum (Gamut) zu erhalten. Diese Funktion ist im Gamut-Berechnungsmodul 176 enthalten. Es analysiert die z.B. während der Profilierung gemessenen Farbmesswerte 151 und erstellt daraus in an sich bekannter Weise die den abgedeckten Farbraum beschreibenden Gamut-Daten 177. Solche Gamut-Daten können beispielsweise die maximalen XYZ-Werte sein. Die Gamut-Daten 177 können über die äussere Kommunikationsschnittstelle 230 oder, wenn die Profilierungsvorrichtung als separates Gerät arbeitet, über deren Schnittstelle 130 von einem externen Gerät abgefragt werden.

Die Kalibrierung von Beamern oder anderen Geräten, z.B. Monitoren, die Erstellung von Geräteprofilen und die Erzeugung von Gamut-Daten sind an sich bekannt. Kalibrierungsfunktionen, Chart-Erzeugung, Profilerstellung und Gamut-Daten-Erzeugung sind z.B. im Software-Paket "Profile Maker" der Firma Logo GmbH, einer Gesellschaft der GretagMacbeth Gruppe, enthalten und können ohne substantielle Änderung in der erfindungsgemässen Profilierungsvorrichtung eingesetzt werden, was in der Fig. 2 durch den strichlierten Kasten 165 angedeutet ist.

Für den Datenaustausch zwischen der Profilierungsvorrichtung 100 und dem Projektor 200 (oder einem anderen, über die Schnittstelle 130 angeschlossenen Gerät) ist natürlich ein vereinbartes Protokoll erforderlich. Vorzugsweise wird dafür ein einfaches text-basiertes Protokoll verwendet. Dabei können Befehle durch leicht verständliche Code-Wörter, eventuell gefolgt von erforderlichen Parametern, dargestellt werden. Daten wird ebenfalls ein Code-Wort vorangestellt, und darauf folgen die Zahlenwerte entsprechend der Art der Daten (z.B. RGB-Werte oder die genormte Sequenz von Profildaten). Das Befehlsverarbeitungsmodul 190 interpretiert anhand dieses Protokolls die eingehenden Daten und formatiert die an die Schnittstelle 130 auszugebenden Daten entsprechend diesem Protokoll. Es versteht sich, dass natürlich auch im Projektor 200 bzw. einem anderen, an die Profilierungsvorrichtung angeschlossenen Gerät ein entsprechendes Programm-Modul vorhanden sein muss, welches das vereinbarte Prokoll verstehen und die ausgetauschten Daten entsprechend aufbereiten kann.

Die erfindungsgemässe Profilierungsvorrichtung enthält alle für das Color Management (Farbmessung, Profilierung, Kalibrierung etc.) erforderlichen Funktionalitäten und verkehrt mit dem Projektor oder einem sonstigen angeschlossenen Gerät über eine der in diesem standardmässig vorhandenen Datenschnittstellen mittels eines vereinbarten, vorzugsweise einfachen text-basierten Protokolls. Letzteres kann im Projektor relativ einfach rein software-mässig (z.B. durch ein sog. Firmware-Upgrade) implementiert werden, so dass also keine Änderungen der grundlegenden Konzeption des Projektors erforderlich sind. Dadurch kann die erfindungsgemässe Profilierungsvorrichtung einerseits leicht werksseitig in bestehende Projektoren integriert und anderseits auch als externe Ergänzung zu vorhandenen Projektoren eingesetzt werden. Durch den erfindungsgemässen Aufbau kann die Profilierungsvorrichtung aber auch als eigenständiges Gerät für die Profilierung von anderen elektronischen Anzeigeeinrichtungen (z.B. Monitore) sowie auch für andere z.B. messtechnische Aufgaben eingesetzt werden.

Bei einem elektronischen Projektor (Beamer) hängt der Farbeindruck nicht nur vom Gerät selbst, sondern auch von der Reflexions- und Streucharakteristik der Projektionsfläche (z.B. Leinwand), der spektralen Verteilung und der Helligkeit des Umgebungslichts im Raum sowie von wahrnehmungs- und empfindungsbestimmenden Faktoren des menschlichen Beobachters, z. B. dem Adaptationsgrad des Auges ab. Diese Faktoren sind auch verantwortlich dafür, dass eine während der Herstellung des Projektors durchgeführte Grundkalibration und Profilierung keine optimale Farbreproduktion ermöglicht. Idealerweise muss die Kalibration und Profilierung beim Anwender in regelmässigen Abständen durchgeführt und wiederholt werden, so dass einerseits all diese Einflussfaktoren berücksichtigt und anderseits auch Veränderungen und Alterungsprozesse im optischen System des Projektors kompensiert werden können. Die erfindungsgemässe Profilierungsvorrichtung bzw. der erfindungsgemäss mit einer solchen Profilierungsvorrichtung ausgestattete Projektor macht dies für den Benutzer sehr einfach, indem dieser (z.B. durch Drücken des dafür vorgesehenen Bedienungsorgans) lediglich den Kalibrierungs- und Profilierungsvorgang auslösen muss und alles andere dann vollständig automatisch abläuft.

Wenn der Projektor schon kalibriert und profiliert ist, ist für die Anpassung an veränderte Umgebungslichtverhältnisse nicht unbedingt eine vollständige Neu-Profilierung erforderlich. Stattdessen kann das bereits bestehende Profil anhand weniger Einzelmessungen, insbesondere einer Hell- und einer Dunkelmessung modifiziert werden. Die absoluten XYZ-Farbmesswerte der Dunkelmessung können zu den absoluten Farbwerten des bestehenden Projektor-Profils dazuaddiert werden. Mit den absoluten XYZ--Farbmesswerten der Hellmessung wird eine chromatische Adaptation oder Verschiebung (Shift) des Weisspunkts der absoluten Farbwerte des Beamerprofils durchgeführt. Die chromatische Adaptation der Farbwerte kann gemäss den Formeln von Kries, wie z.B. im Buch Color Appearance Models von M. Fairchild im Kapitel 9 beschrieben, durchgeführt werden.

Diese Nach-Profilierung kann manuell mittels des Betätigungsorgans 240 oder auch automatisch ausgelöst werden. Da sie nur zwei Messungen (dunkel, hell) erfordert, kann sie auch während des laufenden Betriebs des Projektors (z.B. während einer Präsentation) erfolgen. Der Beobachter würde durch die eingeschobene Projektion der für die beiden Messungen erforderlichen Weiss- und des Schwarzbilder wenn überhaupt nur ein ganz kurzzeitiges Flackern an der Projektionsfläche wahrnehmen, welches kaum stört. Die automatische Auslösung der Nach-Profilierung kann z.B. durch einen Umgebungslichtsensor oder vorzugsweise auch durch die Profilierungsvorrichtung selbst erfolgen, indem diese während der gesamten Projektionszeit aktiv bleibt und Helligkeit und Farbe auf der Projektionsfläche überwacht, um dynamische Veränderungen zu erkennen. Bei manueller Nach-Profilierung/Kalibrierung soll das Projektionslicht durch den Projektor aktiv auf Minimum gestellt werden.

Wenn die Profilierungsvorrichtung in einen Projektor integriert ist, kann sie wie in der EP-A-1 150 159 beschrieben auch dazu verwendet werden, automatisch in regelmässigen Abständen den Kalibrationszustand des Projektors zu überprüfen und eine Neukalibrierung und -profilierung oder zum Beispiel auch einen Lampenwechsel zu veranlassen. Die Messdaten können dabei auch zur Kontrolle des allgemeinen Funktionszustands des Projektors ausgewertet werden. Je nach Ergebnis dieser Auswertung kann automatisch eine Neukalibrierung, ggf. inkl. Neuprofilierung ausgelöst oder eine Anforderungsmeldung für erforderliche Wartungsarbeiten ausgegeben werden.

Die Fig. 5 zeigt, wie die erfindungsgemässe Profilierungsvorrichtung 100 als eigenständiges Gerät mit einem elektronischen Projektor 200 über dessen äussere Kommunikationsschnittstelle 230 zusammengeschaltet werden kann. Damit die Profilierungsvorrichtung und der Projektor zusammenarbeiten können, müssen im Projektor natürlich analoge Software-Funktionen vorhanden sein wie beim erfindungsgemässen Projektor der Fig. 3. Die Profilierungsvorrichtung 100 ist hier mit einem Schwenk- bzw. Kippfuss versehen und im praktischen Einsatz z.B. auf dem Projektor 200 so angeordnet und ausgerichtet, dass sie Messlicht von einem relativ kleinen Messfleck 301 im wesentlichen etwa im Zentrum des vom Projektor ausgeleuchteten Bereichs der Projektionsfläche 300 empfängt.

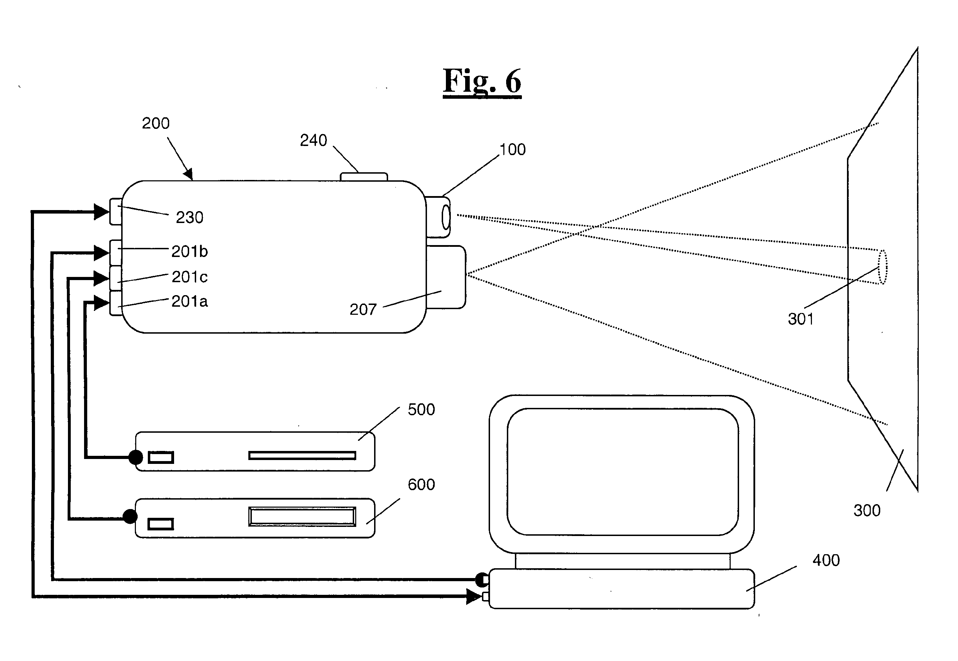

In Fig. 6 ist dargestellt, wie der erfindungsgemässe Projektor 200 im praktischen Einsatz mit verschiedenen Bilddatenquellen zusammengeschaltet sein kann. Der Projektor empfängt dabei Bilddaten alternativ von einem externen Rechner 400, von einem DVI-Abspielgerät 500 oder einem Video(band)-Abspielgerät 600. Der externe Rechner 400 ist ausserdem über eine seiner Kommunikationsschnittstellen an die Kommunikationsschnittstelle 230 des Projektors 200 angeschlossen und kann so mittels geeigneter Software mit dem Projektor 200 und der in diesem integrierten Profilierungsvorrichtung 100 kommunizieren.

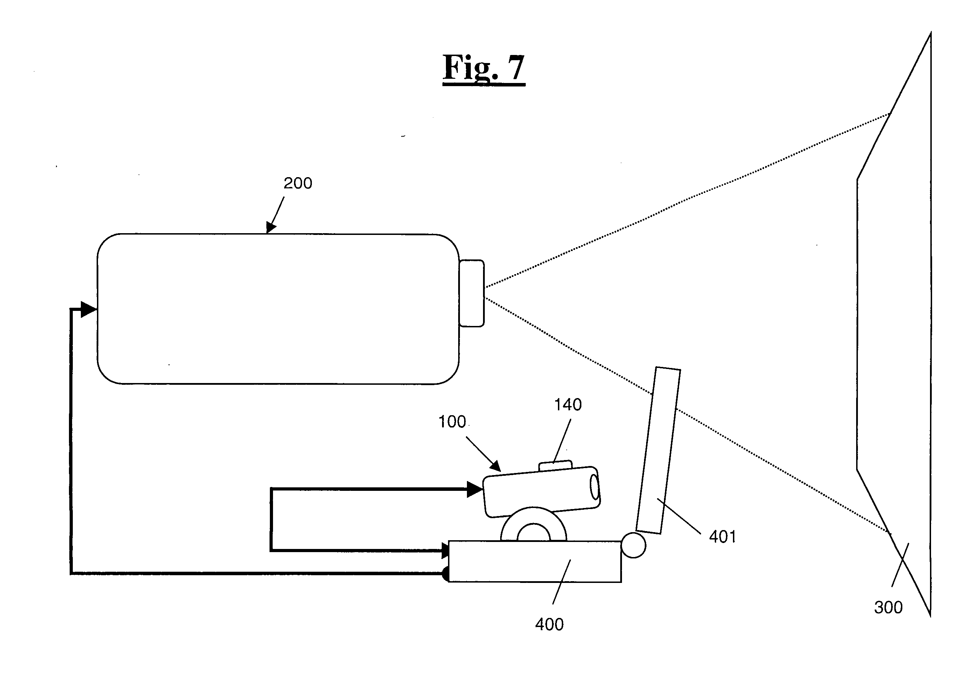

Wie schon erwähnt, kann die erfindungsgemässe Profilierungsvorrichtung auch für andere Zwecke eingesetzt werden, etwa zur Profilierung des Monitors eines Rechners, so wie dies in Fig. 7 dargestellt ist. Die Profilierungsvorrichtung 100 ist dazu vor dem Monitor 401 eines Rechners 400 positioniert und mit dem Rechner über dessen USB-Schnittstelle verbunden. Auf dem Rechner 400 läuft eine Software, die die Kommunikation mit der Profilierungsvorrichtung 100 ermöglicht. Ausgelöst durch Drücken auf das Betätigungsorgan 140 der Profilierungsvorrichtung 100 oder durch einen Befehl des Rechners 400 selbst erfolgt nun ein Profilierungszyklus, wie er weiter oben im Zusammenhang mit der Projektionsvorrichtung 200 beschrieben ist. Die Profilierungsvorrichtung schickt dabei die RGB-Vorgabefarbwerte der einzelnen Farbmuster einer Farbtafel an den Rechner 400, und dieser stellt die Farbmuster bildlich auf seinem Monitor 401 dar. Die Profilierungsvorrichtung 100 misst die dauf dem Monitor dargestellten Farbmuster aus und berechnet das Monitor-Profil. Dieses wird von der Profilierungsvorrichtung 100 an den Rechner 400 übermittelt und dort in der üblichen Weise angewandt. Wenn der Rechner 400 als Bilddatenquelle für einen Projektor 200 benutzt wird, ist es auf diese Weise für den Benutzer relativ einfach und bequem, die Farbgänge des Monitors 401 und des Projektors 200 zu synchronisieren.

In analoger Weise kann die erfindungsgemässe Profilierungsvorrichtung auch zur Synchronisierung (gleicher Kontrast, gleiche Helligkeit, gleiche Farbtemperatur) von zwei oder mehreren im selben Raum arbeitenden Projektoren (bzw. generell Anzeigevorrichtungen) eingesetzt werden. Dabei müssen natürlich die qualitativ besseren Projektoren an den qualitativ schlechtesten Projektor angepasst werden. Die Kalibrationsdaten des schlechtesten Projektors bilden dann die Vorgabewerte für die Kalibration der besseren Projektoren.

Bei manchen Anwendungsfällen werden mehrere Projektoren in einem Feld angeordnet, wobei jeder Projektor einen Ausschnitt der gesamten Bildinformation darstellt (sg. Tiling). Hierbei ist eine Synchronisierung der beteiligten Projektoren besonders wesentlich. Dazu müssen natürlich alle beteiligten Teil-Bildfelder ausgemessen werden. Dies kann nach einem weiteren Gedanken der Erfindung durch eine modifizierte Ausbildung der Profilierungsvorrichtung erfolgen, indem deren Farbmesseinheit mit einem auch örtlich auflösenden Farbdetektor-Feld und einer entsprechend angepassten Eingangs-Optik ausgestattet ist, die die Erfassung mehrerer Bildbereiche erlauben. Als dafür geeignetes Farbdetektor-Feld ist z.B. der Waben-Farbsensor der Firma Mazet GmbH, Deutschland einsetzbar.

Die erfindungsgemässe Profilierungsvorrichtung 100 kann, wie schon erwähnt, an ihrer Schnittstelle 130 auch die Farbmesswerte 151 zur Verfügung stellen. Dadurch ist es möglich, die Profilierungsvorrichtung auch als reines Farbmessgerät für die verschiedensten Anwendungen einzusetzen. Dies gilt auch dann, wenn die Profilierungsvorrichtung 100 wie in Fig. 3 dargestellt in einen Projektor 200 integriert ist, wobei dann allerdings die Farbmesswerte über die äussere Kommunikationsschnittstelle 230 des Projektors 200 zur Verfügung stehen. So kann die Profilierung eines Projektors auch in herkömmlicher Weise mittels einer auf einem an den Projektor angeschlossenen Rechner laufenden Profilierungssoftware durchgeführt werden. Dabei liefert die auf dem Rechner laufende Profilierungssoftware die Vorgabesollwerte der Farbmuster einer Farbtafel und sendet sie zur Darstellung an den Projektor. Die integrierte oder extern angeschlossene Profilierungsvorrichtung misst die dargestellten Farbmuster aus und sendet die entsprechenden Farbmesswerte an den Rechner. Die Profilierungssoftware im Rechner berechnet das Geräteprofil und sendet es an den Projektor zur Einstellung desselben. Nähere Details dieser Profilierungsmethode (unter Verwendung eines klassischen Farbmessgeräts) sind z.B. in der schon genannten EP-A-1 150 159 ausführlich beschrieben.

Ferner ist es mit der erfindungsgemässen Profilierungsvorrichtung auch möglich, ein Ausgabeprofil für die Ausgabe von Bilddaten von einem Rechner auf einen Projektor (oder generell Anzeigevorrichtung) zu erstellen. Dies läuft im Prinzip gleich ab wie im vorstehenden Absatz beschrieben, nur wird das Ausgabeprofil im Rechner abgelegt. So können z.B. mehrere Rechner auf mehrere Projektoren eingestellt werden, wobei für jede Rechner-Projektor-Kombination ein eigenes Ausgabeprofil erzeugt und verwendet würde.

Wenn der Projektor von einer anderen Bilddatenquelle als einem Rechner gespeist wird, z.B. einem DVI-Abspielgerät oder einem Video-Abspielgerät, kann es sein, dass der Datenkanal vom Datenträger (DVD, Video-Band, CD) über das betreffende Abspielgerät und Verbindungskabel, Verteiler, Normumsetzer etc. bis hin zum Projektor nicht perfekt ist. Anders als Rechner enthalten solche Bilddatenquellen bzw. Abspielgeräte normalerweise keine Color Management Funktionen, so dass eine Korrektur über Ausgabeprofile ausscheidet.

Gemäss einem weiteren wichtigen Gedanken der Erfindung wird in solchen Fällen eine Kalibrierung/Profilierung "über alles", d.h. vom Datenträger über den Projektor bis zur Projektionsfläche, dadurch erreicht, dass auf den Datenträger selbst Kalibrierungs- und Profilierungsfarbmuster (Charts) aufgezeichnet werden, welche dann bei der Darstellung mittels des Projektors 200 von der Profilierungsvorrichtung 100 ausgemessen und zur Kalibrierung und Profilierung des Projektors verwendet werden. Diese im folgenden als "Video-Charts" bezeichneten Kalibrierungs- und Profilierungsfarbmuster können entweder als Vorspann zu der eigentlichen Bildinformation auf dem Datenträger aufgezeichnet oder aber auch auf einem separaten Datenträger (derselben Art wie der die Bilddaten enthaltende Datenträger) angeordnet sein. Der die Video-Charts darstellende Datenstrom wird als Profilierdatenstrom bezeichnet.

Die Video-Charts können im Prinzip gleich aufgebaut sein wie die für die Kalibrierung und Profilierung üblicherweise verwendeten Farbtafeln (Charts), also eine Sequenz von verschiedenen bunten und farbneutralen Feldern, sog. Patches. Den einzelnen Farbmustern (Patches) ist ein Identifikationsmuster (eine definierte Abfolge von Farb- oder Schwarz-Weiss-Mustern) vorgeschaltet, welches bei der Darstellung durch den Projektor vom Trigger-Modul 180 der Profilierungsvorrichtung 100 als Trigger-Sequenz erkannt wird und dann zur Auslösung des Messvorgangs der folgenden Farbmuster führt. Analog ist ein weiteres Identifikationsmuster nachgeschaltet, welches nach abgeschlossenem Messvorgang über das Trigger-Modul die Profilberechnung auslöst. Das so berechnete Profil wird dann wie schon beschrieben dem Projektor zur Verfügung gestellt.

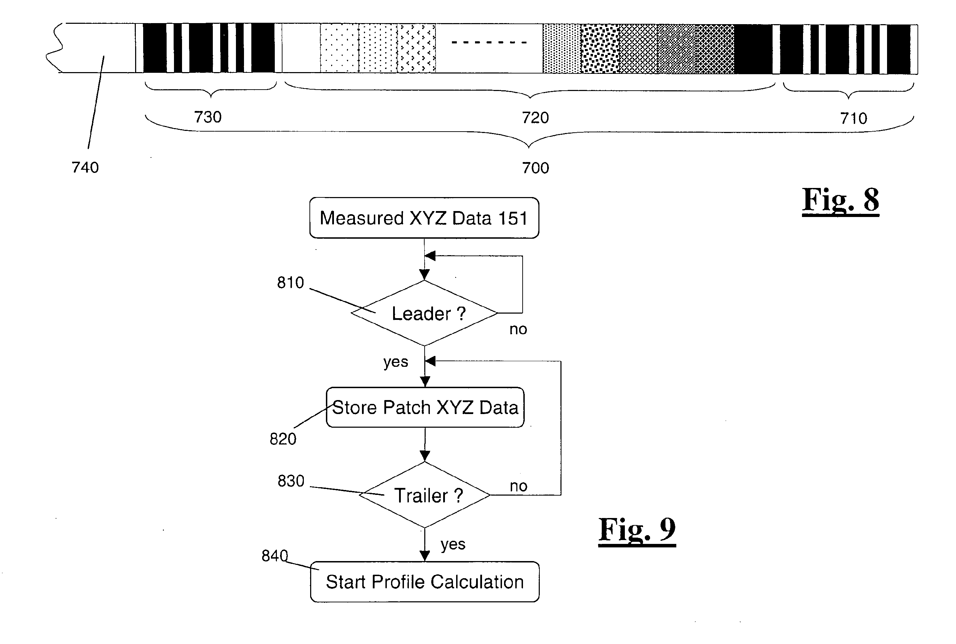

In Fig. 8 ist ein Ausschnitt aus einem mit einem Video-Chart versehenen Bilddatenstrom grafisch veranschaulicht. Das Video-Chart ist als Ganzes mit 700 bezeichnet und umfasst das vorlaufende Identifikationsmuster (Leader-Sequenz) 710, die einzelnen Farbmuster 720 der Farbtafel und das abschliessende Identifikationsmuster (Trailer-Sequenz) 730. Daran schliessen sich dann die eigentlichen Bilddaten 740 an.

Die Fig. 9 zeigt blockschematisch die wichtigsten Abläufe des erfindungsgemässen Profilierungsverfahrens, das durch entsprechende Programmierung der Profilierungsvorrichtung realisiert ist. Zunächst werden die laufend ermittelten XYZ-Farbmesswerte 151 im Block 810 (Teil des Trigger-Moduls 180) auf das Auftreten der dem vorlaufenden Identifikationsmuster (Leader) entsprechenden Farbwert-Abfolge (Leading-Trigger-Sequenz) analysiert. Sobald das Identifikationsmuster erkannt ist, werden die Farbmesswerte der dann folgenden Farbmuster (Patches) für die weitere Verarbeitung, speziell die Profilerstellung gespeichert (Block 820). Gleichzeitig werden die Farbmesswerte 151 im Block 830 (Teil des Trigger-Moduls 180) auf das Auftreten der dem nachlaufenden Identifikationsmuster (Trailer) entsprechenden Farbwert-Abfolge (Trailing Trigger-Sequenz) analysiert. Sobald das Identifikationsmuster erkannt ist, wird im Block 840 (Teil des Trigger-Moduls 180) die Berechnung des Profils ausgelöst.

Falls die Art und Abfolge der einzelnen Farbmuster (Patches) nicht standardisiert (festgelegt) ist, müssen natürlich auch die entsprechenden Informationen (die den einzelnen Farbmustern zugrundeliegenden RGB-Farbwerte) auf dem Datenträger geeignet codiert aufgezeichnet sein, z.B. in Form einer Balken-Code-analogen Abfolge von dunklen und hellen Patches unterschiedlicher Dauer. Das Trigger-Modul 180 in der Profilierungsvorrichtung ist dann dazu ausgebildet, diese codierten Informationen zu erkennen und die entsprechenden Datenwerte an die sie benötigenden anderen Programm-Module (speziell das Profilerstellungsmodul 170) weiterzugeben.

Je nach Datenträger kann vor dem Video-Chart auch noch ein kurzer Film mit Benutzerinformationen und/oder einer Menü-Führung vorgesehen sein. Speziell gilt dies für DVD, Video-CD, SVCD etc.

Selbstverständlich ist es auch möglich, ein "Video-Chart" als Vorspann in einen von einem Rechner zur Verfügung gestellten Bilddatenstrom zu integrieren und so eine Kalibrierung/Profilierung des kompletten Datenkanals zu bewirken. Das "Video-Chart" kann z.B. als Datei zur Verfügung stehen und so einfach in den Bilddatenstrom eingebaut werden. Analoges gilt auch für Bilddaten, die aus einemNetzwerk oder aus dem Internet stammen. Auch ist es möglich, Video-Charts in lauffähige Präsentationen (z.B. Microsoft Power Point) zu integrieren. Die aufgezählten Möglichkeiten sind lediglich beispielsweise zu verstehen und nicht abschliessend.

Die Profilierungsvorrichtung "sieht" während der Kalibrierung/Profilierung verschiedene Randbedingungen wie Umgebungslicht (Farbe, Stabilität, Intensität), Tönung der Projektionsfläche, allenfalls gemischt mit Farbstich des Projektors, Verhältnis von Nutzlicht und Fremdlicht, Stabiltät des Projektionslichts (Flackern). Die Profilierungsvorrichtung kann mit Software-Funktionen ausgestattet sein, welche diese Randbedingungen abfragt und dem Benutzer in geeigneter Form mitteilt, wie gut ein erzeugtes Profil ist bzw. was ggf. zur Verbesserung des Resultats zu tun ist. Diese Information kann z.B. dreistufig mittels farbiger Anzeigeorgane (grün, gelb, rot) erfolgen.

Die Profilierungsvorrichtung kann ferner auch mit Software-Funktionen ausgestattet sein, welche ohne Neumessung einen Wechsel des sog. Rendering Intents (z.B. "Colorimetric", Perceptual", "Saturatin") und eine entsprechende Neuberechnung des Profils ermöglichen. Dies würde dem Benutzer gestatten, die Profilierung nach seinen persönlichen Präferenzen zu wählen.

## Patentansprüche

1. Profilierungsvorrichtung, insbesondere für einen elektronischen Projektor, **gekennzeichnet durch** eine Farbmesseinheit (110), die aus sie beaufschlagendem Messlicht diesem entsprechende digitale Farbmesswerte erzeugt, einen Rechner (120) zur Steuerung der Farbmesseinheit und zur Verarbeitung der von dieser erzeugten Farbmesswerte und eine vom Rechner gesteuerte bi-direktionale Schnittstelle (130) zum Austausch von Daten und Steuerbefehlen mit einer mit der Profilierungsvorrichtung (100) verbundenen externen Vorrichtung (200), insbesondere einem elektronischen Projektor, wobei der Rechner (120), die Farbmesseinheit (110) und die Schnittstelle (130) zu einer selbständigen kompakten Baueinheit (100) zusammcngcfasst sind, und wobei der Rechner (120) ein Profilerstellungsprogramm (170) enthält, das **durch** einen über die Schnittstelle (130) von der externen Vorrichtung zugeführten Startbefehl gestartet werden kann und anhand der von der Farbmesseinheit (110) erzeugten Farbmesswerte ein Geräteprofil (171) berechnet, welches der Rechner (120) über die Schnittstelle (130) zur Übernahme **durch** die externe Vorrichtung (200) zur Verfügung stellt.

2. Vorrichtung nach Anspruch 1, **dadurch gekennzeichnet, dass** das Profilerstellungsprogramm (170) dazu ausgebildet ist, Vorgabefarbwerte (161) der einzelnen Farbmuster eines Farbmustersatzes zu erzeugen und über die Schnittstelle (130) der angeschlossenen externen Vorrichtung (200) zur Verfügung zu stellen, aufgrund welcher Vorgabefarbwerte die externe Vorrichtung (200) die entsprechenden Farbmuster bildlich darstellen kann, und dass die Farbmesseinheit (110) dazu ausgebildet ist, die von der externen Vorrichtung (200) erzeugten bildlichen Darstellungen der Farbmuster auszumessen und entsprechende Farbmesswerte (151) zu bilden, und dass das Profilerstellungsprogramm (170) dazu ausgebildet ist, das Geräteprofil (171) aus den zur Verfügung gestellten Vorgabefarbwerten (161) und den entsprechenden Farbmesswerten (151) zu berechnen.

3. Vorrichtung nach einem der vorangehenden Ansprüche, **dadurch gekennzeichnet, dass** der Rechner (120) ein Kalibrierungsprogramm (173) enthält, das durch einen über die Schnittstelle (130) von der externen Vorrichtung (200) zugeführten Startbefehl gestartet werden kann und anhand der von der Farbmesseinheit (110) erzeugten Farbmesswerte (151) Kalibrierungsdaten (175) berechnet, welche der Rechner (120) über die Schnittstelle (130) zur Übernahme durch die externe Vorrichtung (200) zur Verfügung stellt.

4. Vorrichtung nach Anspruch 3, **dadurch gekennzeichnet, dass** das Kalibrierungsprogramm (173) dazu ausgebildet ist, Vorgabekalibrierungsfarbwerte (174) von Kalibrierungsfarbmustern zu erzeugen und über die Schnittstelle (130) der angeschlossenen externen Vorrichtung (200) zur Verfügung zu stellen, aufgrund welcher Vorgabekalibrierungsfarbwerte (174) die externe Vorrichtung die entsprechenden Kalibrierungsfarbmuster bildlich darstellen kann, und dass die Farbmesseinheit (110) dazu ausgebildet ist, die von der externen Vorrichtung (200) erzeugten bildlichen Darstellungen der Kalibrierungsfarbmuster auszumessen und entsprechende Farbmesswerte (151) zu bilden, und dass das Kalibrierungsprogramm (173) dazu ausgebildet ist, die Kalibrierungsdaten (175) aus den zur Verfügung gestellten Vorgabekalibrierungsfarbwerten (174) und den entsprechenden gemessenen Farbmesswerten (151) zu berechnen.

5. Vorrichtung nach Anspruch 4, **dadurch gekennzeichnet, dass** das Kalibrierungsprogramm (173) als Kalibrierungsdaten (175) Werte für die Helligkeit (B), den Kontrast (C) und die Farbtemperatur (T) berechnet und über die Schnittstelle (130) zur Verfügung stellt.

6. Vorrichtung nach einem der vorangehenden Ansprüche, **dadurch gekennzeichnet, dass** der Rechner (120) ein Gamut-Berechnungsprogramm (176) enthält, welches auf Anforderung über die Schnittstelle (130) aus den gemessenen Farbmesswerten (151) Gamut-Daten (177) berechnet und an der Schnittstelle (130) zur Verfügung stellt, welche Gamut-Daten (177) den Farbraum beschreiben, der durch die gemessenen Farbmesswerte (151) abgedeckt ist bzw. durch die angeschlossene externe Vorrichtung (200) darstellbar ist.

7. Vorrichtung nach einem der vorangehenden Ansprüche, **dadurch gekennzeichnet, dass** der Rechner (120) ein Trigger-Programm (180) enthält, welches die von der Farbmesseinheit (110) erzeugten Farbmesswerte (151) analysiert und auf das Auftreten einer oder mehrerer vorgegebener Farbmesswert-Triggersequenzen anspricht und dann abhängig von der erkannten Farbmesswert-Triggersequenz das Kalibrierungsprogramm (173) und/oder das Profilerstellungsprogramm (170) startet.

8. Vorrichtung nach einem der vorangehenden Ansprüche, **dadurch gekennzeichnet, dass** der Rechner (120) dazu ausgebildet ist, auf Anforderung über die Schnittstelle (130) von der Farbmesseinheit (110) erzeugte Farbmesswerte (151) an der Schnittstelle (130) zur Verfügung zu stellen.

9. Vorrichtung nach einem der vorangehenden Ansprüche, **dadurch gekennzeichnet, dass** der Rechner (120) dazu ausgebildet ist, über die Schnittstelle (130) Steuerdaten (191) von der an der Schnittstelle (130) angeschlossenen externen Vorrichtung (200) entgegenzunehmen und Steuerdaten (191) zur Steuerung der an der Schnittstelle (130) angeschlossenen externen Vorrichtung (200) zur Verfügung zu stellen.

10. Vorrichtung nach einem der vorangehenden Ansprüche, **dadurch gekennzeichnet, dass** ein mit dem Rechner (120) zusammenwirkendes Bedienungsorgan (140) vorgesehen ist, mit dem das Profilierungsprogramm (170) und/oder das Kalibrierungsprogramm (173) manuell gestartet werden kann.

11. Vorrichtung nach einem der vorangehenden Ansprüche, **dadurch gekennzeichnet, dass** die Farbmesseinheit () mit einem auch örtlich auflösenden Farbdetektor-Feld und einer entsprechend angepassten Eingangs-Optik ausgestattet ist, die die Erfassung mehrerer örtlich getrennter Bildbereiche erlauben.

12. Vorrichtung nach einem der vorangehenden Ansprüche, **dadurch gekennzeichnet, dass** eine Software-Funktionen vorgesehen ist, welche aus den Farbmesswerten Randbedingungen wie Umgebungslicht, Tönung der Projektionsfläche, Verhältnis von Nutzlicht zu Fremdlicht und Stabiltät des Projektionslichts erkennen und entsprechende Meldungen an den Benutzer erzeugen kann.

13. Vorrichtung nach einem der vorangehenden Ansprüche, **dadurch gekennzeichnet, dass** eine Software-Funktionen vorgesehen ist, welche ohne Neumessung einen Wechsel des Rendering Intents und eine entsprechende Neuberechnung des Profils ermöglichen.

14. Elektronischer Projektor mit mindestens einer Eingangsstufe (201 a,b,c) für elektronische Bilddaten, einer Transformationsstufe (210), der die über die Eingangsstufe zugeführten elektronischen Bilddaten (202) in den Farbraum des Projektors transformiert, einem optischen Modulator (205), der die vom Farbraumkonverter erzeugten, transformierten Bilddaten (204) in optische Bildinformation umwandelt, einer Optik (207) zur Projektion der vom Modulator erzeugten optischen Bildinformation auf eine Projektionsfläche und einer rechnerbasierten Steuerung (220) für die Transformationsstufe (210) und den Modulator (205), **gekennzeichnet durch** eine bi-direktionale Schnittstelle (225) und eine über diese mit der Steuerung (220) verbundene, eine selbständige kompakte Baueinheit bildende Profilierungsvorrichtung (100), welche eine Farbmesseinheit (110), die aus sie beaufschlagendem Messlicht diesem entsprechende digitale Farbmesswerte (151) erzeugt, einen Rechner (120) zur Steuerung der Farbmesseinheit und zur Verarbeitung der von dieser erzeugten Farbmesswerte und eine vom Rechner gesteuerte bi-direktionale Schnittstelle (130) zum Austausch von Daten und Steuerbefehlen mit der Steuerung (220) des Projektors (200) aufweist, wobei der Rechner (120) der Profilierungsvorrichtung (100) ein Profilerstellungsprogramm (170) enthält, das **durch** einen von der Steuerung (220) des Projektors (200) zugeführten Startbefehl gestartet werden kann und anhand der von der Farbmesseinheit (110) erzeugten Farbmesswerte (151) ein Geräteprofil (171) berechnet, welches der Rechner (120) der Profilierungsvorrichtung (100) zur Einstellung der Transformationsstufe (210) zur Verfügung stellt und anhand welchen Geräteprofils (171) die Steuerung (220) des Projektors (200) die Transformationsstufe (210) einstellt.

15. Projektor nach Anspruch 14, **dadurch gekennzeichnet, dass** das Profilerstellungsprogramm (170) dazu ausgebildet ist, Vorgabefarbwerte (161) der einzelnen Farbmuster eines Farbmustersatzes zu erzeugen und an die Steuerung (220) des Projektors (200) zu übergeben, wobei die Steuerung (220) den Projektor veranlasst, die entsprechenden Farbmuster bildlich darzustellen, und dass die Farbmesseinheit (110) dazu ausgebildet ist, die vom Projektor (200) erzeugten bildlichen Darstellungen der Farbmuster auszumessen und entsprechende Farbmesswerte (151) zu bilden, und dass das Profilerstellungsprogramm (170) dazu ausgebildet ist, das Geräteprofil (171) aus den zur Verfügung gestellten Vorgabefarbwerten (161) und den entsprechenden Farbmesswerten (151) zu berechnen.

16. Projektor nach einem der Ansprüche 14-15, **dadurch gekennzeichnet, dass** der Rechner (120) der Profilierungsvorrichtung (100) ein Kalibrierungsprogramm (173) enthält, das durch einen von der Steuerung (220) des Projektors (200) erzeugten Startbefehl gestartet werden kann und anhand der von der Farbmesseinheit (110) erzeugten Farbmesswerte (151) Kalibrierungsdaten (175) berechnet, welche der Rechner (120) der Steuerung (220) zur Verfügung stellt und anhand welcher die Steuerung (220) den Projektor (220) kalibriert.

17. Projektor nach Anspruch 16, **dadurch gekennzeichnet, dass** das Kalibrierungsprogramm (173) dazu ausgebildet ist, Vorgabekalibrierungsfarbwerte (174) von Kalibrierungsfarbmustern zu erzeugen und an die Steuerung (220) des Projektors zu übergeben, wobei die Steuerung (220) den Projektor veranlasst, die entsprechenden Kalibrierungsfarbmuster bildlich darzustellen, und dass die Farbmesseinheit (110) dazu ausgebildet ist, die vom Projektor (200) erzeugten bildlichen Darstellungen der Kalibrierungsfarbmuster auszumessen und entsprechende Farbmesswerte (151) zu bilden, und dass das Kalibrierungsprogramm (173) dazu ausgebildet ist, die Kalibrierungsdaten (175) aus den zur Verfügung gestellten Vorgabekalibrierungsfarbwerten (174) und den gemessenen Farbmesswerten (151) zu berechnen.

18. Projektor nach Anspruch 17, **dadurch gekennzeichnet, dass** das Kalibrierungsprogramm (173) als Kalibrierungsdaten (175) Werte für die Helligkeit (B), den Kontrast (C) und die Farbtemperatur (T) berechnet und der Steuerung (220) des Projektors zur Verfügung stellt.

19. Projektor nach einem der Ansprüche 14-18, **dadurch gekennzeichnet, dass** der Rechner (120) ein Gamut-Berechnungsprogramm (176) enthält, welches auf Anforderung über die Schnittstelle (130) aus den gemessenen Farbmesswerten (151) Gamut-Daten (177) berechnet und an der Schnittstelle (130) zur Verfügung stellt, welche Gamut-Daten (177) den Farbraum beschreiben, der durch die gemessenen Farbmesswerte (151) abgedeckt ist bzw. durch den Projektor (200) darstellbar ist.

20. Projektor nach einem der Ansprüche 14-19, **dadurch gekennzeichnet, dass** der Rechner (120) der Profilierungsvorrichtung (100) ein Trigger-Programm (180) enthält, welches die von der Farbmesseinheit (110) erzeugten Farbmesswerte (151) analysiert und auf das Auftreten einer oder mehrerer vorgegebener Farbmesswert-Triggersequenzen anspricht und dann abhängig von der erkannten Farbmesswert-Triggersequenz das Kalibrierungsprogramm (173) und/oder das Profilerstellungsprogramm (170) startet.

21. Projektor nach einem der Ansprüche 14-20, **dadurch gekennzeichnet, dass** der Rechner (120) der Profilierungsvorrichtung (100) dazu ausgebildet ist, auf Anforderung über die Schnittstelle (130) von der Farbmesseinheit (110) erzeugte Farbmesswerte (151) an der Schnittstelle (130) zur Verfügung zu stellen.

22. Projektor nach einem der Ansprüche 14-21, **dadurch gekennzeichnet, dass** er ein mit der Steuerung (220) zusammenwirkendes Bedienungsorgan (240) aufweist, mit dem der Startbefehl für das Profilierungsprogramm (170) und/oder das Kalibrierungsprogramm (173) ausgelöst werden kann.

23. Projektor nach einem der Ansprüche 14-22, **dadurch gekennzeichnet, dass** er eine mit der Steuerung (220) des Projektors zusammenwirkende äussere Kommunikationsschnittstelle (230) aufweist, und dass die Steuerung (220) die Profilierungsvorrichtung (100) mit der Kommunikationsschnittstelle (230) so verbindet, dass ein an die Kommunikationsschnittstelle (230) angeschlossenes, rechner-basiertes externes Gerät mit der Profilierungsvorrichtung (100) zum Daten- und Befehlsaustausch kommunizieren kann.

24. Verfahren zur Profilierung einer durch einen Bilddatenstrom gespeisten elektronischen Anzeigevorrichtung für die bildliche Darstellung der durch den Bilddatenstrom repräsentierten Bildinformation, insbesondere eines elektronischen Projektors, **dadurch gekennzeichnet, dass** der Anzeigevorrichtung (200) ein Profilierdatenstrom (700) zugeführt wird, welcher ein Identifikationsmuster (710) und daran anschliessend eine Abfolge von Farbmustern (720) einer Farbtafel darstellt, dass das Identifikationsmuster (710) und die Abfolge von Farbmustern (720) von der Anzeigevorrichtung (200) bildlich dargestellt werden, dass die von der Anzeigevorrichtung (200) bildlich dargestellten Muster farbmetrisch ausgemessen und von jedem Muster entsprechende Farbmesswerte (151) bestimmt werden, dass das Auftreten des Identifikationsmusters durch Analyse der gemessenen Farbmesswerte (151) detektiert und zur Verfahrenssteuerung in dem Sinne ausgewertet wird, dass nach dem Auftreten des Identifikationsmusters (710) aus den Farbmesswerten (151) der nachfolgenden Farbmuster (720) der Farbtafel und diesen Farbmustern zugrundeliegenden Vorgabefarbwerten ein Geräteprofil (171) der Anzeigevorrichtung (200) berechnet wird, und dass die Anzeigevorrichtung (200) mit diesem Geräteprofil (171) eingestellt wird.

25. Verfahren nach Anspruch 24, **dadurch gekennzeichnet, dass** sich der Bilddatenstrom (740) auf einem Datenträger befindet und dass der Profilierdatenstrom (700) auf einem separaten Datenträger derselben Art angeordnet ist.

26. Verfahren nach Anspruch 24, **dadurch gekennzeichnet, dass** sich der Bilddatenstrom (740) auf einem Datenträger befindet und dass sich der Profilierdatenstrom (700) vorzugsweise als Vorspann auf demselben Datenträger wie der Bilddatenstrom befindet.

27. Verfahren nach einem der Ansprüche 24-26, **dadurch gekennzeichnet, dass** der Profilierdatenstrom (700) als elektronische Datei vorliegt und in den Bilddatenstrom (740) vorzugsweise als Vorspann eingefügt wird.
